# EUROPEAN PATENT APPLICATION

(11) **EP 4 424 565 A1**
(43) Date of publication of application: **04.09.2024**
(21) Application number: 21964402.8
(22) Date of filing: 19.11.2021
(51) Int. Cl.: B60W 40/02

(54) **INFORMATION PROCESSING METHOD AND APPARATUS**

(71) Applicant: Huawei Technologies Co., Ltd., Shenzhen, Guangdong 518129 (CN)
(72) Inventor: SONG, Sida, Shenzhen, Guangdong 518129 (CN); MA, Sha, Shenzhen, Guangdong 518129 (CN); ZHOU, Zheng, Shenzhen, Guangdong 518129 (CN)
(74) Representative: Maiwald GmbH
(86) International application number: PCT/CN2021/131761
(87) International publication number: WO 2023/087248

(57) **Abstract**

An information processing method and apparatus are provided. The method includes: obtaining, by a first apparatus, first information, where the first information includes environment information of a terminal in which the first apparatus is located; receiving second information from a second apparatus, where the second information indicates region information and/or time information of the terminal; and then outputting first sensed information for the terminal based on the first information and the second information. According to the method, the region information and/or the time information of the terminal are/is first received, and then the first sensed information is output based on the environment information of the terminal in which the first apparatus is located and the region information and/or the time information of the terminal, so that applicability of a sensing system of the terminal to scenarios corresponding to different spatial-temporal information can be improved. The different spatial-temporal information may be used to distinguish between scenarios with a large space and/or time span. For example, the terminal is a vehicle. According to the method, performance of an intelligent driving system of the vehicle can be improved.

## Description

### TECHNICAL FIELD

This application relates to the field of intelligent driving technologies, and in particular, to an information processing method and apparatus.

### BACKGROUND

With the development of society, more and more machines in modern life are developing towards automation and intelligence. Intelligent vehicles are gradually entering people's daily life. An intelligent driving system has also become an important part of an intelligent vehicle. The intelligent driving system may be classified into a driver assistance system, an automated driving system, and the like. In recent years, an advanced driver-assistance system (advanced driving assistant system, ADAS) has played an important role in the intelligent vehicle. The advanced driver-assistance system uses various sensors mounted on a vehicle to, during traveling process of the vehicle, sense the surroundings, collect data, identify, detect, and track still or moving objects, and perform system operations and analysis in combination with navigation map data, allowing for a driver to be aware of potential dangers in advance, thereby effectively improving comfort and safety of the vehicle during traveling. The ADAS lays the foundation for truly implementing automated driving.

Functions to be implemented by automated driving include sensing prediction, decision-making and planning, vehicle control, and the like. A sensing system is an "eye" of an autonomous vehicle, and is configured to sense an environment, an obstacle, and the like. The sensing system is a basis for whether the autonomous vehicle can travel safely. For example, the sensing system includes various sensors, and may obtain information about an environment around the vehicle.

Based on this, how to improve performance of an advanced driver-assistance system or an automated driving system is a technical problem that needs to be resolved urgently.

### SUMMARY

This application provides an information processing method and apparatus, to improve performance of an intelligent driving system.

According to a first aspect, this application provides an information processing method. The method is applied to an information processing apparatus. The information processing apparatus may be, for example, any sensor mounted on a terminal. The method includes: obtaining first information, where the first information includes environment information of a terminal in which a first apparatus is located; receiving second information from a second apparatus, where the second information indicates region information and/or time information of the terminal; and outputting first sensed information for the terminal based on the first information and the second information. According to the method, the region information and/or the time information of the terminal are/is first received, and then the first sensed information is output based on the environment information of the terminal in which the first apparatus is located and the region information and/or the time information of the terminal, so that applicability of a sensing system of the terminal to scenarios corresponding to different spatial-temporal information can be improved. The different spatial-temporal information may be used to distinguish between scenarios with a large space and/or time span. For example, the terminal is a vehicle. According to the method, performance of an intelligent driving system of the vehicle can be improved.

In a possible implementation, the obtaining first information includes: detecting the environment information of the terminal; or receiving the first information from the second apparatus.

In a possible implementation, the region information and/or the time information correspond/corresponds to a first algorithm, and the first algorithm belongs to a predefined algorithm set. The outputting first sensed information for the terminal based on the first information and the second information includes: outputting the first sensed information for the terminal based on the first algorithm and the first information. In this implementation, a plurality of algorithms respectively corresponding to different region information and/or time information may be predefined. The environment information of the terminal is processed based on the first algorithm corresponding to the region information and/or the time information, and the first sensed information is output. In this way, applicability of the sensing system of the terminal to scenarios corresponding to different spatial-temporal information can be improved, thereby improving performance of the intelligent driving system.

In a possible implementation, the region information and/or the time information are/is used to construct a first neural network model. The outputting first sensed information for the terminal based on the first information and the second information includes: outputting the first sensed information for the terminal based on the first neural network model. In this implementation, an initial neural network model may be deployed, and the region information and/or the time information are/is input to the initial neural network model. In this way, the initial neural network model may be automatically adjusted to the first neural network model that adapts to scenarios corresponding to different spatial-temporal information (including the region information and/or the time information), thereby reducing training and deployment overheads of the sensing system.

In a possible implementation, the outputting first sensed information for the terminal based on the first information and the second information includes: sending the first sensed information to a fusion unit. The fusion unit may fuse sensed information output by the first apparatus and sensed information output by another sensor, to obtain fused information with higher reliability.

In a possible implementation, the region information includes one or more of a continent name, a country name, a region name, a province, or a city; and/or the time information includes time system information, where the time system information includes one or more of a season, a holiday, a solar term, or a seasonal timekeeping practice.

In a possible implementation, the first apparatus includes any one of the following: a camera apparatus; a lidar; a pickup apparatus; an ultrasonic sensor; or a millimeter-wave radar.

According to a second aspect, this application provides an information processing method, applied to an information processing apparatus. The information processing apparatus may be, for example, a fusion unit in a terminal. The method includes: receiving at least one piece of first information from at least one first apparatus, where the first information includes environment information of a terminal in which the first apparatus is located; receiving second information from a second apparatus, where the second information indicates region information and/or time information of the terminal; and outputting first fused information for the terminal based on the at least one piece of first information and the second information. According to the method, the region information and/or the time information of the terminal are/is first received, and then the first fused information is output based on the environment information of the terminal in which the first apparatus is located and the region information and/or the time information of the terminal, so that applicability of an intelligent driving system to scenarios corresponding to different spatial-temporal information can be improved. The different spatial-temporal information may be used to distinguish between scenarios with a large space and/or time span. For example, the terminal is a vehicle. According to the method, performance of an intelligent driving system of the vehicle can be improved.

In a possible implementation, the region information and/or the time information correspond/corresponds to at least one first algorithm, and the at least one first algorithm belongs to a predefined algorithm set. The outputting first fused information for the terminal based on the at least one piece of first information and the second information includes: outputting the first fused information for the terminal based on the at least one first algorithm and the at least one piece of first information. In this implementation, a plurality of first algorithms respectively corresponding to different region information and/or time information may be predefined. The environment information of the terminal is processed based on the first algorithm corresponding to the region information and/or the time information, and the first fused information is output. In this way, applicability of a sensing system of the terminal to scenarios corresponding to different spatial-temporal information can be improved, thereby improving performance of the intelligent driving system.

In a possible implementation, a plurality of algorithms in the predefined algorithm set correspond to different sensors, and/or correspond to different region information and/or time information.

In a possible implementation, the region information and/or the time information are/is used to construct a first neural network model. The outputting first fused information for the terminal based on the at least one piece of first information and the second information includes: outputting the first fused information for the terminal based on the first neural network model. In this implementation, an initial neural network model may be deployed, and the region information and/or the time information are/is input to the initial neural network model. In this way, the initial neural network model can be automatically adjusted to the first neural network model that adapts to scenarios corresponding to different spatial-temporal information, thereby reducing training and deployment overheads of the sensing system.

In a possible implementation, the at least one piece of first information includes one or more pieces of information from at least one sensor, a user, a communication module, or a map module.

In a possible implementation, the region information includes one or more of a continent name, a country name, a region name, a province, or a city; and/or the time information includes time system information, where the time system information includes one or more of a season, a holiday, a solar term, or a seasonal timekeeping practice.

In a possible implementation, the first apparatus includes any one of the following: a camera apparatus; a lidar; a pickup apparatus; an ultrasonic sensor; or a millimeter-wave radar.

According to a third aspect, this application provides an information processing method, applied to an information processing apparatus. The information processing apparatus may be, for example, an external module in a terminal or an external module mounted on a terminal. The method includes: determining second information, where the second information indicates region information and/or time information of a terminal; and sending the second information to a first apparatus. According to the method, for example, the first apparatus may be any sensor on the terminal, and the region information and/or the time information of the terminal are/is provided for the sensor. In this way, the sensor can output first sensed information based on environment information of the terminal in which the first apparatus is located and the region information and/or the time information of the terminal. For another example, the first apparatus may be a fusion unit on the terminal, and the region information and/or the time information of the terminal are/is provided for the fusion unit. In this way, the fusion unit can output first fused information based on the environment information of the terminal in which the first apparatus is located and the region information and/or the time information of the terminal, so that applicability of a sensing system of the terminal to scenarios corresponding to different spatial-temporal information can be improved. The different spatial-temporal information may be used to distinguish between scenarios with a large space and/or time span. For example, the terminal is a vehicle. According to the method, performance of an intelligent driving system of the vehicle can be improved.

In a possible implementation, the determining second information includes: determining the second information based on a user input, where the user input is a screen-based input or a voice input; or determining the second information based on a push of an operator; or determining the second information based on information from a map module. In this implementation, the second information may be determined in a plurality of manners.

According to a fourth aspect, this application further provides an information processing apparatus, configured to perform the methods in any one of the foregoing aspects or the possible implementations of the foregoing aspects. Specifically, an information transmission apparatus may include modules/units configured to perform the methods in any one of the foregoing aspects or the possible implementations of the foregoing aspects. These modules/units may be implemented by hardware, or may be implemented by hardware executing corresponding software.

According to a fifth aspect, this application further provides an information processing apparatus. The information processing apparatus includes at least one processor and a communication interface. The communication interface is configured to: receive a signal from a communication apparatus other than the information processing apparatus and transmit the signal to the at least one processor, or send a signal from the at least one processor to a communication apparatus other than the information processing apparatus. The at least one processor is configured to implement, through a logic circuit or by executing code instructions, operation steps of the method in any one of the first aspect or the possible implementations of the first aspect, or operation steps of the method in any one of the second aspect or the possible implementations of the second aspect, or operation steps of the method in any one of the third aspect or the possible implementations of the third aspect.

According to a sixth aspect, this application further provides a terminal. The terminal includes an apparatus configured to perform the method in any one of the first aspect or the possible implementations of the first aspect, and an apparatus configured to perform the method in any one of the third aspect or the possible implementations of the third aspect. Alternatively, the terminal includes an apparatus configured to perform the method in any one of the second aspect or the possible implementations of the second aspect, and an apparatus configured to perform the method in any one of the third aspect or the possible implementations of the third aspect.

According to a sixth aspect, this application further provides a computer-readable storage medium. The computer-readable storage medium stores a computer program. When the computer program is run, operation steps of the method in any one of the first aspect or the possible implementations of the first aspect are implemented, or operation steps of the method in any one of the second aspect or the possible implementations of the second aspect are implemented, or operation steps of the method in any one of the third aspect or the possible implementations of the third aspect are implemented.

According to a sixth aspect, this application further provides a computer program product. The computer program product includes a computer program or instructions. When the computer program or the instructions is/are executed by a communication apparatus, operation steps of the method in any one of the first aspect or the possible implementations of the first aspect are implemented, or operation steps of the method in any one of the second aspect or the possible implementations of the second aspect are implemented, or operation steps of the method in any one of the third aspect or the possible implementations of the third aspect are implemented.

### BRIEF DESCRIPTION OF DRAWINGS

FIG. 1 is a schematic diagram of a vehicle sensing system according to an embodiment of this application;
FIG. 2 is a schematic diagram of a system according to an embodiment of this application;
FIG. 3 is a schematic diagram of a system according to an embodiment of this application;
FIG. 4 is a schematic diagram of a system according to an embodiment of this application;
FIG. 5 is a schematic flowchart of an information processing method according to an embodiment of this application;
FIG. 6 is a schematic flowchart of an information processing method according to an embodiment of this application;
FIG. 7 is a schematic diagram of an information processing apparatus according to an embodiment of this application;
FIG. 8 is a schematic diagram of an information processing apparatus according to an embodiment of this application; and
FIG. 9 is a schematic diagram of an information processing apparatus according to an embodiment of this application.

### DESCRIPTION OF EMBODIMENTS

The following further describes in detail this application with reference to accompanying drawings. It is clear that the described embodiments are some rather than all of embodiments of this application. A specific operation method in a method embodiment may also be applied to an apparatus embodiment. In descriptions of embodiments in this application, a person of ordinary skill in the art may understand that various numbers such as "first" and "second" in this application are merely used for differentiation for ease of description, and are not used to limit the scope of embodiments of this application or represent a sequence. "A plurality of" means two or more. The term "and/or" describes an association relationship between associated objects and indicates that three relationships may exist. For example, A and/or B may indicate the following three cases: Only A exists, both A and B exist, and only B exists. The character "/" usually indicates an "or" relationship between associated objects. "At least one" means one or more. "At least two" means two or more. "At least one", "any one", or a similar expression thereof indicates any combination of these items, and includes a singular item (piece) or any combination of plural items (pieces).

Currently, an intelligent driving vehicle may sense an environment around the vehicle by using a sensing system. For example, the sensing system includes various sensors, and may sense information about an environment around the vehicle. However, these sensors collect information about a local environment around the vehicle. Although traffic environments around the world are roughly the same, there are still regional differences in some aspects, especially in aspects closely related to road traffic, for example, traffic facilities (such as markers, markings, signs, and signal lights), traffic police (such as garments and gestures), and special transport vehicles (such as police vehicles, ambulances, and fire engines). For a sensing system of automated driving, regional or time differences in traffic environments bring challenges to algorithm training and deployment. Currently, there are two methods for training and deploying these algorithms. In the first method, a large and comprehensive algorithm is trained, and the first method is applicable to different traffic environments around the world. However, this method requires a large amount of annotated data around the world for sample training. In addition, an ultra-large network imposes high pressure on on-board computing units. Therefore, the method is not realistic from the perspective of costs of training and deployment. In the other method, an intelligent driving vehicle running in an area is trained by using image data of the area. This method requires attention to the running area of the vehicle during deployment. Once the vehicle travels out of an area familiar in a training phase, that is, an application scope of the design, algorithm performance is reduced, affecting safety of intelligent driving. In this method, the intelligent driving vehicle can run only in a specific area, but traffic scenarios in many areas have different scenario characteristics. For example, traffic environments in Hong Kong, Zhuhai in Guangdong, Macao, and mainland regions in China, and countries in continental Europe have different characteristics. In the second method, the sensing system is less applicable to different scenarios with a large space and/or time span. Therefore, a method is urgently needed to resolve a problem of how to improve performance of an intelligent driving system.

In view of this, an embodiment of this application provides an information processing method. Any sensor mounted on a terminal outputs first sensed information for the terminal with reference to environment information of the terminal in which the sensor is located and region information and/or time information of the terminal. Alternatively, a fusion unit on the terminal outputs first fused information for the terminal with reference to the environment information of the terminal in which the fusion unit is located and the region information and/or the time information of the terminal, so that applicability of a sensing system of the terminal to scenarios corresponding to different spatial-temporal information can be improved. The different spatial-temporal information may be used to distinguish between scenarios with a large space and/or time span. For example, the terminal is a vehicle, and the method can more easily meet users' requirements for vehicles traveling in scenarios corresponding to different spatial-temporal information. Therefore, according to the method, performance of an intelligent driving system of a vehicle can be improved.

The industry proposes a classification standard for a driving automation system. A driving automation classification standard proposed by the Society of Automotive Engineers International (society of automotive engineers international, SAE International for short) defines 6 levels ranging from L0 to L5. L0, L1, and L2 driver support systems can provide some support functions for a driver. However, regardless of whether a driver support function of the vehicle is enabled, the driver needs to drive the vehicle on his/her own and supervise support functions provided by the driver support systems at all times, and the driver needs to perform operations such as steering, braking, or acceleration as required to ensure safety. A difference between L0, L 1, and L2 support functions is as follows: L0 is no driving automation, and support functions of L0 are limited to providing warnings and momentary assistance; support functions of L1 provide steering or braking/acceleration support for the driver; and support functions of L2 provide steering and braking/acceleration support for the driver. L3 is conditional driving automation. An automated driving system can complete some driving tasks and monitor a driving environment in some cases. However, the driver is expected to resume driving control at any time. For example, when a function requests it, the driver needs to drive. L4 is high driving automation. An automated driving system can complete driving tasks and monitor a driving environment in some environments and under specific conditions. L5 is full driving automation. An automated driving system can complete all driving tasks under all conditions.

In this embodiment of this application, the intelligent driving system may be classified into an ADAS and an automated driving system. The advanced driver-assistance system (ADAS) may be a driving automation system that reaches a level ranging from L0 to L2, and the automated driving system is a driving automation system that reaches a level ranging from L3 to L5 or higher.

It should be noted that the terminal in this embodiment of this application may be, for example, a vehicle or another apparatus in a vehicle. The another apparatus includes but is not limited to another sensor such as an in-vehicle terminal, an in-vehicle controller, an in-vehicle module, an in-vehicle component, an in-vehicle chip, an in-vehicle unit, an in-vehicle radar, or an in-vehicle camera. The vehicle may use the in-vehicle terminal, the in-vehicle controller, the in-vehicle module, the in-vehicle component, the in-vehicle chip, the in-vehicle unit, the in-vehicle radar, or the in-vehicle camera. Certainly, the terminal may be an intelligent terminal other than the vehicle, or a component disposed in an intelligent terminal other than the vehicle. The intelligent terminal may be an intelligent transportation device, a smart home device, a robot, or the like. For example, the another apparatus includes but is not limited to an intelligent terminal or another sensor such as a controller, a chip, a radar, or a camera in the intelligent terminal, another component, and the like.

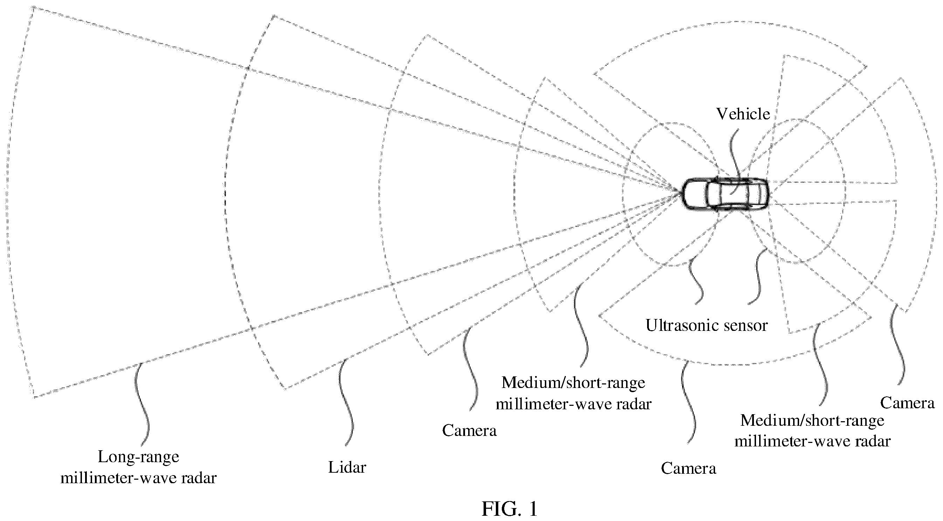

A plurality of sensors may be mounted on the terminal. For example, in FIG. 1, the terminal is used as a vehicle for illustration. The vehicle is equipped with a camera apparatus (for example, a camera in FIG. 1), a lidar, a millimeter-wave radar (for example, a long-range millimeter-wave radar or a medium/short-range millimeter-wave radar in FIG. 1), an ultrasonic sensor, and the like, so as to obtain information about an environment around the vehicle by using the sensors. The vehicle analyzes and processes the obtained environment information, to implement functions such as obstacle sensing, target recognition, vehicle positioning, path planning, and driver monitoring/warning, thereby improving safety, automation, and comfort of vehicle driving. The environment information obtained by the sensor is mainly for an object around the terminal, for example, traffic light information, traffic sign information, traffic police, or an obstacle. Details are not described below.

The camera apparatus is configured to obtain image information of an environment in which the vehicle is located. Currently, a plurality of cameras may be mounted on the vehicle to obtain information of more angles. The lidar is short for light detection and ranging (light laser detection and ranging, LiDAR) system, and mainly includes a transmitter, a receiver, and a signal processing unit. The transmitter is a laser transmitting mechanism in the lidar. After a laser transmitted by the transmitter irradiates a target object, the laser is reflected by the target object, and the reflected light is converged on the receiver through a lens group. The signal processing unit is responsible for controlling transmission of the transmitter, processing a signal received by the receiver, and calculating information such as a position, a speed, a distance, and/or a size of the target object.

Using millimeter waves as a detection medium, the millimeter-wave radar can measure a distance, an angle, and a relative speed between the millimeter-wave radar to a measured object. The millimeter-wave radar may be classified into a long-range radar (long range radar, LRR), medium-range radar (mid-range radar, MRR), and short-range radar (short range radar, SRR) based on a detection range of the millimeter-wave radar. The LRR is mainly used in scenarios such as adaptive cruise control and braking assistance. The LRR does not have high requirements for a width of a detection angular domain, that is, the LRR has low requirements for a 3 dB beamwidth of an antenna. The MRR/SRR is mainly used in scenarios such as automatic parking, lane changing assistance, and blind spot detection. The MRR/SRR has high requirements for a width of a detection angular domain, that is, the MRR/SRR has high requirements for a 3 dB beamwidth of an antenna and requires the antenna to have a low side lobe level. The beamwidth is used to ensure a detectable angular range. The low side lobe is used to reduce clutter energy reflected by the ground, reduce a false alarm probability, and ensure driving safety. The LRR can be mounted on the front of the vehicle, and the MRR/SRR can be mounted at four corners of the vehicle. The LRR and the MRR/SRR may be used in combination to provide 360-degree coverage around the vehicle.

The millimeter-wave radar may include a housing, and at least one printed circuit board (printed circuit board, PCB) is built in the housing. For example, the printed circuit board may include a power supply PCB and a radar PCB. The power supply PCB may provide a voltage for use inside the radar, and may also provide an interface for communicating with another device and a security function. The radar PCB may provide transceiving and processing of a millimeter-wave signal, and is integrated with components for processing the millimeter-wave signal and antennas (a transmit antenna Tx and a receive antenna Rx) for transmitting and receiving the millimeter-wave signal. The antennas may be formed on the back of the radar PCB in a manner of a microstrip array, and are configured to transmit and receive millimeter waves.

Also referred to as an ultrasonic radar, the ultrasonic sensor is a sensing apparatus that uses ultrasonic detection. A working principle of the ultrasonic sensor is that an ultrasonic wave is transmitted outward by using an ultrasonic-wave transmitting apparatus, the ultrasonic wave reflected by an obstacle is received by using a receiving apparatus, and a distance is calculated based on a time difference between reflecting and receiving the ultrasonic wave. Currently, a distance calculated by an ultrasonic sensor may be used to prompt a distance between a vehicle body and an obstacle, assist in parking or reduce unnecessary collision. It should be understood that the foregoing sensors are merely examples of a sensor that may be configured on the vehicle in this embodiment of this application, but do not constitute any limitation. In another embodiment, the sensor may include but is not limited to the foregoing examples.

In addition to a plurality of sensors, a fusion unit and an external module may further be mounted on the foregoing terminal. The external module may be a module that can interact with the sensor and/or the fusion unit inside the terminal, for example, an electronic control unit, a domain control unit, a multi-domain controller, or a cockpit domain controller. The external module may alternatively be another device outside the terminal.

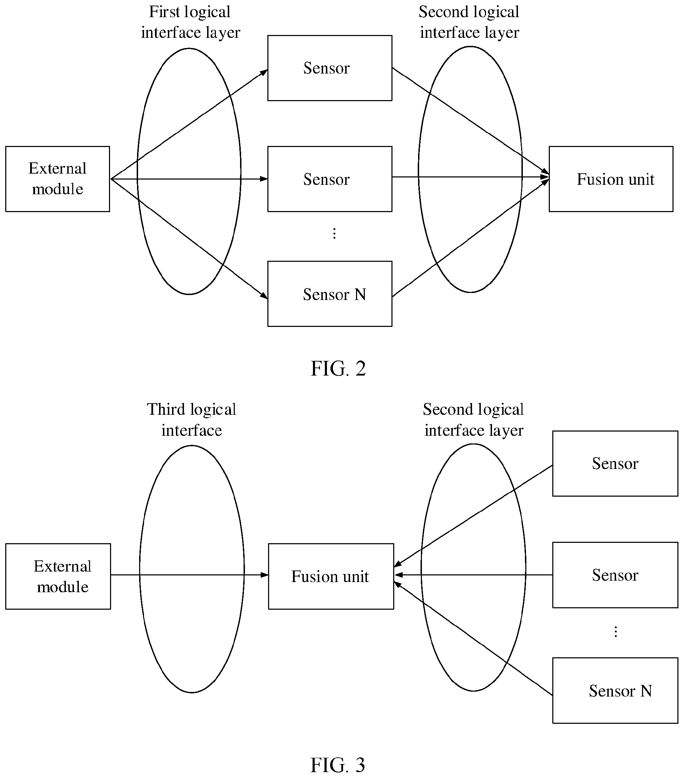

An embodiment of this application further provides an information processing system. The system includes at least one sensor, a fusion unit, and an external module. In the following systems shown in FIG. 2 and FIG. 3, description is made by using an example in which N sensors are included and N is greater than 2. However, a quantity of sensors is not limited.

In a possible implementation, in the information processing system shown in FIG. 2, the N sensors are connected to an external module by using a first logical interface layer. The first logical interface layer includes a plurality of first logical interfaces, and the external modules are connected to each sensor by using different first logical interfaces. For example, each first logical interface may provide one or more pieces of the following information.
(1) An operating status of a sensor, which is used to define a working mode of the sensor, where the working mode is, for example, an initialization mode, a normal working mode, or a calibration mode.
(2) Environment information, which describes weather, time, traffic conditions, and the like around the vehicle.
   For example, the environment information may include the following information: a weather condition, ambient light illuminance, an atmospheric temperature, atmospheric pressure, relative humidity, a road feature (for example, an expressway or an urban area), and a road surface condition (a temperature, water accumulation, freezing, or roughness).
(3) A vehicle status, which is used to describe a dynamic status of the vehicle, where the dynamic status may be understood as that the vehicle is in a moving state. For example, the dynamic status may be described by using a kinematic parameter, and the kinematic parameter includes but is not limited to a speed, an acceleration, a jerk, an orientation, a steering direction, and the like.
(4) An <interface> operation, which is used to define an operation mode of each logical interface and provide an additional parameter. The operation mode of the logical interface is, for example, a working mode (for example, data is being transmitted) or an idle mode. The additional parameter may be supplementary information of data transmitted to a sensor by using the logical interface. For example, the transmitted data is image data, and the additional parameter may be a resolution of the image data.
(5) Region information and/or time information.

As shown in FIG. 2, the N sensors are connected to the fusion unit by using a second logical interface layer. The second logical interface layer includes a plurality of second logical interfaces, and the fusion unit is connected to each sensor by using different second logical interfaces.

The second logical interface may provide information about an object level (for example, a potential moving object, a road object, a static object), information based on characteristics and detection levels of sensor technology-specific information, and more supporting information available.

In this implementation, the external module may send the region information and/or the time information of the vehicle to each of the N sensors by using the first logical interface layer. Each sensor outputs first sensed information to the fusion unit with reference to the environment information sensed by the sensor and the region information and/or the time information of the vehicle. Sensors of different types, different functions, and different mounting positions may obtain redundant, complementary, or even contradictory information about an environment around the terminal. The fusion unit may perform fusion processing on the first sensed information of the plurality of sensors, so as to obtain a fusion result of the sensed information with high reliability.

In another possible implementation, in an information processing system shown in FIG. 3, a fusion unit is connected to an external module by using a third logical interface, and the fusion unit is connected to N sensors by using a second logical interface layer. For a specific implementation of the second logical interface layer herein, refer to related descriptions of the second logical interface layer in FIG. 2. Details are not described herein again. The external module may send region information and/or time information of the vehicle to the fusion unit by using the third logical interface. The N sensors may send, by using the second logical interface layer, information about an environment around the vehicle sensed by the N sensors to the fusion unit. Then, the fusion unit outputs first fused information for the vehicle with reference to the region information and/or the time information and the environment information of the vehicle.

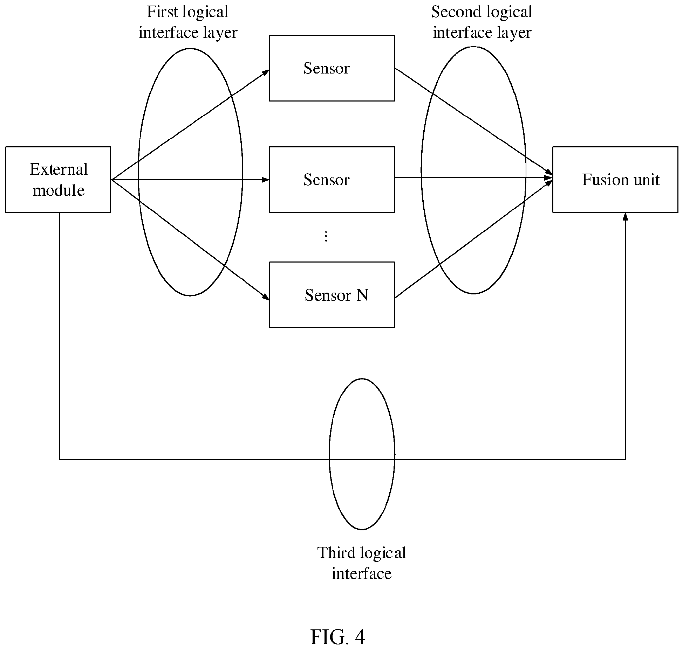

In still another possible implementation, in an information processing system shown in FIG. 4, an external module is connected to a fusion unit by using a third logical interface. The external module is connected to N sensors by using a first logical interface layer. The fusion unit is connected to the N sensors by using a second logical interface layer. The external module may send region information and/or time information of the vehicle to the fusion unit by using the third logical interface, and send the region information and/or the time information to the N sensors by using the first logical interface layer.

External modules in the foregoing three information processing systems may include but are not limited to an electronic control unit, a domain control unit, a multi-domain controller, a cockpit domain controller, an in-vehicle terminal, or the like.

The following describes an information processing method in an embodiment of this application with reference to a method flowchart.

### Embodiment 1

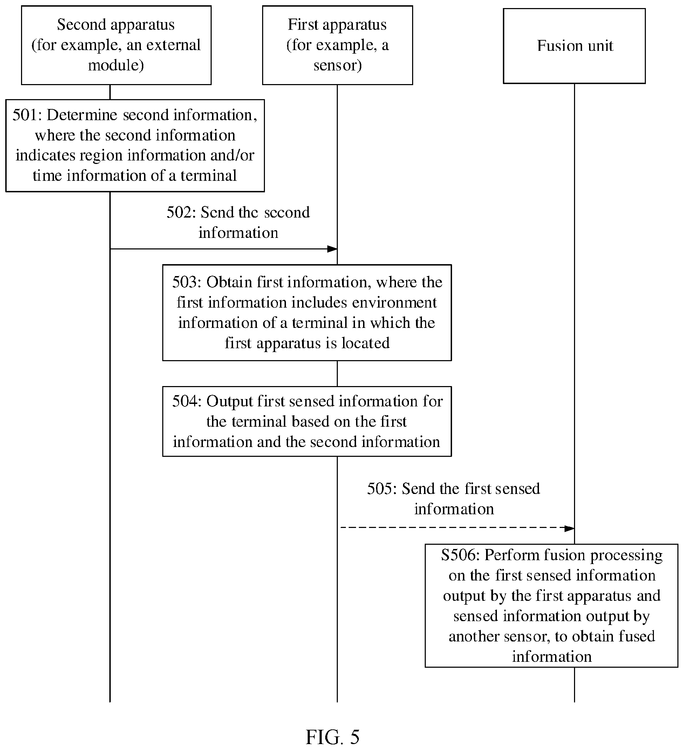

FIG. 5 is a schematic flowchart of an information processing method according to an embodiment of this application. The method is applicable to the system shown in FIG. 2. As shown in FIG. 5, the method may include the following steps.

S501: A second apparatus determines second information, where the second information indicates region information (information about a region in which a terminal is located) and/or time information (information about a time in which the terminal is currently in) of the terminal. In this embodiment of this application, the region information and/or the time information may also be referred to as spatial-temporal information. Different spatial-temporal information may be used to distinguish between scenarios with a large space and/or time span. Details are not described below.

Herein, the second apparatus may be the external module in FIG. 2. For example, the second apparatus is an electronic control unit, a domain control unit, a multi-domain controller, a cockpit domain controller, or an in-vehicle terminal.

The region information may include any one or more of the following: a continent name, a country name, a region name, a province, or a city. The continent name is, for example, Asia or Europe.

The time information includes time system information. The time system information includes one or more of a season, a holiday, a solar term, or a seasonal timekeeping practice. The season may be spring, summer, autumn, or winter. Time system information formulated by each country may be different. For example, the seasonal timekeeping practice may be a solar term such as winter solstice, autumnal equinoctial, or the like observed in China. For example, the seasonal timekeeping practice may be daylight saving time or standard time observed in the United States. The daylight saving time is observed from the second Sunday of March to the first Sunday of November each year, while the standard time is observed from the second Monday of November to the third Monday of March the following year.

In this embodiment of this application, in S501, the second apparatus may determine the second information in a plurality of implementations.

In a possible implementation, the second apparatus may determine the second information based on a user input, where the user input is a screen-based input or a voice input.

In another possible implementation, the second apparatus may determine the second information based on a push of an operator.

In still another possible implementation, the second apparatus may determine the second information based on information from a map module.

S502: The second apparatus sends the second information to a first apparatus. Correspondingly, the first apparatus receives the second information from the second apparatus.

Herein, the first apparatus may be any sensor in FIG. 2. For example, the first apparatus is a camera apparatus, a lidar, a pickup apparatus, an ultrasonic sensor, or a millimeter-wave radar. The pickup apparatus may be any apparatus that can pick up a sound, for example, a microphone.

S503: The first apparatus obtains first information, where the first information includes environment information of a terminal in which the first apparatus is located.

In this embodiment of this application, the first apparatus may obtain the first information in a plurality of implementations.

In a possible implementation, the first apparatus may detect the environment information of the terminal. For example, the first apparatus is a millimeter-wave radar, and may detect road information. For another example, the first apparatus is a camera apparatus, and may collect image data of a surrounding environment.

In another possible implementation, the first apparatus may receive the first information from the second apparatus. Herein, the second apparatus may be an external module. For example, the external module is a large screen, and the first apparatus may receive an input from the large screen. For another example, the external module is a microphone, and the first apparatus may receive a voice input from the microphone.

S504: The first apparatus outputs first sensed information for the terminal based on the first information and the second information.

In this embodiment of this application, in S504, the first apparatus may output the first sensed information for the terminal based on the first information and the second information in a plurality of possible implementations.

In a possible implementation, the region information and/or the time information correspond/corresponds to a first algorithm, and the first algorithm belongs to a predefined algorithm set. The first apparatus outputs the first sensed information for the terminal based on the first algorithm and the first information.

A plurality of first algorithms included in the predefined algorithm set may be obtained by training datasets of different region information and/or time information. These datasets have unique scenario features corresponding to the region information and/or the time information. The trained algorithms are deployed in the terminal according to a requirement. The first algorithm may include but is not limited to any one or more of the following: a special vehicle detection algorithm, a special vehicle siren detection algorithm, a police and gesture detection algorithm, a road sign and marking detection algorithm, a traffic signal light detection algorithm, and the like. When the first algorithm includes a plurality of algorithms, the first algorithm may also be understood as an algorithm package.

In an example, the second information includes the region information. To be specific, the region information corresponds to the first algorithm, and the predefined algorithm set may include first algorithms respectively corresponding to a plurality of pieces of preset region information. The first apparatus may select, from the predefined algorithm set, the first algorithm corresponding to the received region information based on the region information received from the second apparatus, and then process the first information by using the first algorithm, to output the first sensed information for the terminal. For example, the terminal is a vehicle. The method can improve applicability of a sensing system of the terminal to different scenarios with a large space span, thereby improving performance of an intelligent driving system.

In another example, the second information includes the time information. To be specific, the time information corresponds to the first algorithm, and the predefined algorithm set may include first algorithms respectively corresponding to a plurality of pieces of preset time information. The first apparatus may select, from the predefined algorithm set, the first algorithm corresponding to the received time information based on the time information received from the second apparatus, and then process the first information by using the first algorithm, to output the first sensed information for the terminal. For example, the terminal is a vehicle. The method can improve applicability of a sensing system of the terminal to different scenarios with a large time span, thereby improving performance of an intelligent driving system.

In still another example, the second information includes the region information and the time information. To be specific, the region information and the time information correspond to the first algorithm, the predefined algorithm set may include first algorithms respectively corresponding to a plurality of pieces of preset region information and time information, and each piece of the preset region information and preset time information corresponds to one first algorithm. The first apparatus may select, from the predefined algorithm set, the first algorithm corresponding to the region information and the received time information based on the region information and the time information received from the second apparatus, and then process the first information by using the first algorithm, to output the first sensed information for the terminal. For example, the terminal is a vehicle. The method can improve applicability of a sensing system of the terminal to different scenarios with a large space and time span, thereby improving performance of an intelligent driving system.

In this implementation, a plurality of algorithms respectively corresponding to different region information and/or time information may be predefined. The environment information of the terminal is processed based on the first algorithm corresponding to the region information and/or the time information, and the first sensed information is output. In this way, applicability of the sensing system of the terminal to scenarios corresponding to different spatial-temporal information can be improved, and the method can improve performance of the intelligent driving system.

In another possible implementation, the region information and/or the time information are/is used to construct a first neural network model. The first apparatus outputs the first sensed information for the terminal based on the first neural network model and the first information.

In an example, the second information includes the region information. To be specific, the region information is used to construct the first neural network model corresponding to the region information. The first apparatus may input the region information to an initial model of a neural network, and the initial model is automatically adjusted to the first neural network model that adapts to the region information. Then, the first information is used as an input of the first neural network model, and then the first sensed information for the terminal is output. The method can improve applicability of a sensing system of the terminal to different scenarios with a large space span, thereby improving performance of an intelligent driving system.

In another example, the second information includes the time information. To be specific, the time information is used to construct the first neural network model corresponding to the time information. The first apparatus may input the time information to an initial model of a neural network, and the initial model is automatically adjusted to the first neural network model that adapts to the time information. Then, the first information is used as an input of the first neural network model, and then the first sensed information for the terminal is output.

In still another example, the second information includes the region information and the time information. To be specific, the region information and the time information are used to construct the first neural network model corresponding to the region information and the time information. The first apparatus may input the region information and the time information to an initial model of a neural network, and the initial model is automatically adjusted to the first neural network model that adapts to the region information and the time information. Then, the first information is used as an input of the first neural network model, and then the first sensed information for the terminal is output.

In this implementation, an initial neural network model may be deployed in the terminal, and the region information and/or the time information are/is input to the initial neural network model. In this way, the initial neural network model can be automatically adjusted to the first neural network model that adapts to scenarios corresponding to different spatial-temporal information, thereby reducing training and deployment overheads of the sensing system, and improving performance of an intelligent driving system.

In this embodiment of this application, the first apparatus first receives the region information and/or the time information of the terminal, and then outputs the first sensed information based on the environment information of the terminal in which the first apparatus is located and the region information and/or the time information of the terminal, so that applicability of a sensing system of the terminal to scenarios corresponding to different spatial-temporal information can be improved. The different spatial-temporal information may be used to distinguish between scenarios with a large space and/or time span. For example, the terminal is a vehicle. According to the method, performance of an intelligent driving system of the vehicle can be improved.

In a possible implementation, based on the first two possible implementations, the outputting first sensed information for the terminal in S504 may include: sending the first sensed information to a fusion unit, so that the fusion unit performs fusion based on the first sensed information output by the first apparatus and first sensed information output by another sensor, to obtain fused information.

In another possible implementation, after S504, the information processing method may further include S505 and S506.

S505: The first apparatus sends the first sensed information to a third apparatus. Correspondingly, the third apparatus receives the first sensed information sent by the first apparatus.

Herein, the third apparatus is, for example, a fusion unit.

S506: The third apparatus performs fusion processing on the first sensed information output by the first apparatus and the sensed information output by the another sensor, to obtain the fused information.

In some other embodiments, reference may be made to the information processing system shown in FIG. 4. A difference of the implementation of this embodiment from the implementation of the embodiment shown in FIG. 5 lies in that after S504, the fusion unit may alternatively receive the region information and/or the time information from the second apparatus, and the fusion unit may further perform, based on the received region information and/or time information, fusion processing on first sensed information sent by each sensor.

In this embodiment of this application, the fusion unit may fuse the sensed information output by the first apparatus and sensed information output by another sensor, to obtain fused information with higher reliability.

### Embodiment 2

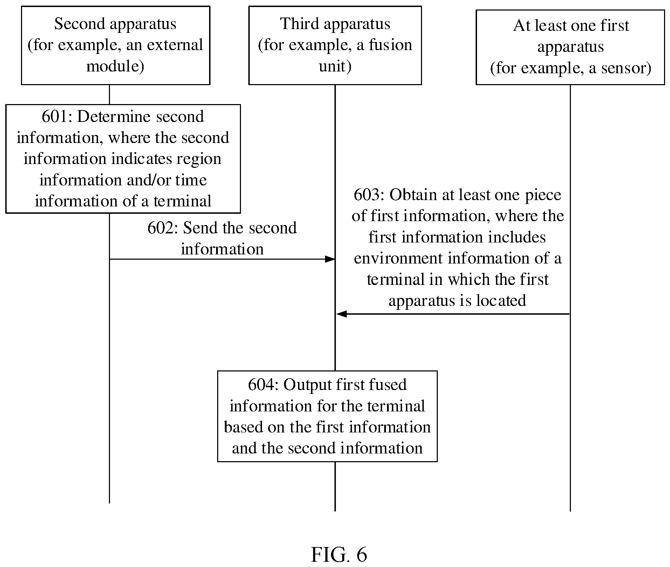

FIG. 6 is a schematic flowchart of an information processing method according to an embodiment of this application. The method is applicable to the system shown in FIG. 3. As shown in FIG. 6, the method may include the following steps.

S601: A second apparatus determines second information, where the second information indicates region information (information about a region in which a terminal is located) and/or time information (information about a time in which the terminal is currently in) of the terminal. In this embodiment of this application, the region information and/or the time information may also be referred to as spatial-temporal information. Different spatial-temporal information may be used to distinguish between scenarios with a large space and/or time span. Details are not described below.

Herein, the second apparatus may be the external module in FIG. 3. For example, the second apparatus is an electronic control unit, a domain control unit, a multi-domain controller, a cockpit domain controller, or an in-vehicle terminal.

For specific implementation of the region information or the time information, refer to related descriptions of the region information or the time information in S401. Details are not described herein again.

In this embodiment of this application, in S601, the second apparatus may determine the second information in a plurality of implementations.

In a possible implementation, the second apparatus may determine the second information based on a user input, where the user input is a screen-based input or a voice input.

In another possible implementation, the second apparatus may determine the second information based on a push of an operator.

In still another possible implementation, the second apparatus may determine the second information based on information from a map module.

S602: The second apparatus sends the second information to a third apparatus. Correspondingly, the third apparatus receives the second information from the second apparatus.

Herein, the third apparatus may be the fusion unit in FIG. 3.

S603: A third apparatus receives at least one piece of first information from at least one first apparatus, where the first information includes environment information of a terminal in which the first apparatus is located.

Herein, the first apparatus may be any sensor in FIG. 3. For example, the first apparatus is a camera apparatus, a lidar, a pickup apparatus, an ultrasonic sensor, a millimeter-wave radar, an inertial navigation system, or a GNSS. The pickup apparatus may be any apparatus that can pick up a sound, for example, a microphone. The first apparatus may alternatively be a large screen, a communication module, a map module, or the like. In a possible implementation, the at least one piece of first information in S603 includes one or more pieces of information from at least one sensor, a user, a communication module (for example, a V2X module that may directly or indirectly exchange information with the third apparatus), or a map module.

S604: The third apparatus outputs first fused information for the terminal based on the at least one piece of first information and the second information.

In this embodiment of this application, in S604, the third apparatus outputs the first fused information for the terminal based on the at least one piece of first information and the second information in a plurality of possible implementations.

In a possible implementation, the region information and/or the time information correspond/corresponds to at least one first algorithm, and the at least one first algorithm belongs to a predefined algorithm set. The third apparatus may output the first fused information for the terminal based on the at least one first algorithm and the at least one piece of first information. In this way, a plurality of first algorithms respectively corresponding to different region information and/or time information may be predefined. The environment information of the terminal is processed based on the first algorithm corresponding to the region information and/or the time information, and the first fused information is output, so that applicability of a sensing system of the terminal to scenarios corresponding to different spatial-temporal information can be improved. The different spatial-temporal information may be used to distinguish between scenarios with a large space and/or time span, thereby improving performance of an intelligent driving system.

In this embodiment of this application, a plurality of algorithms included in the predefined algorithm set correspond to different sensors, and/or the plurality of algorithms correspond to different region information and/or time information. Specifically, the plurality of algorithms included in the predefined algorithm set correspond to different sensors, or the plurality of algorithms included in the predefined algorithm set correspond to different region information and/or time information, or the plurality of algorithms included in the predefined algorithm set correspond to different sensors and different region information and/or time information.

A plurality of first algorithms included in the predefined algorithm set may be obtained by training datasets of different region information and/or time information. These datasets have unique scenario features corresponding to the region information and/or the time information. The trained algorithms are deployed in the terminal according to a requirement. The first algorithm may include but is not limited to any one or more of the following: a special vehicle detection algorithm, a special vehicle siren detection algorithm, a police and gesture detection algorithm, a road sign and marking detection algorithm, a traffic signal light detection algorithm, and the like. When the first algorithm includes a plurality of algorithms, the first algorithm may also be understood as an algorithm package.

In an example, the second information includes the region information, and the region information corresponds to one first algorithm. To be specific, the first algorithm may process first information from different sensors. The third apparatus may select, from the predefined algorithm set, the first algorithm corresponding to the received region information based on the region information received from the second apparatus, and then process the at least one piece of first information from each sensor by using the first algorithm, to output the first fused information for the terminal. Similarly, the second information includes the time information, and the time information corresponds to the first algorithm. For specific implementation, refer to this example. The second information includes the region information and the time information, and the region information and the time information correspond to one first algorithm. For specific implementation, refer to this example. Details are not described herein again.

In another example, the second information includes the region information, and the region information corresponds to a plurality of first algorithms. The plurality of first algorithms respectively process first information from different sensors. For example, a first algorithm 1 is used to process first information from the camera apparatus, a first algorithm 2 is used to process first information from the lidar, and a first algorithm 3 is used to process first information from the millimeter-wave radar. In this example, the third apparatus may select, from the predefined algorithm set, the plurality of first algorithms corresponding to the received region information based on the region information received from the second apparatus, and then process the at least one piece of first information from each sensor by using the plurality of first algorithms, to output the first fused information for the terminal. Similarly, the second information includes time information, and the time information corresponds to a plurality of first algorithms. For specific implementation, refer to this example. The second information includes the region information and the time information, and the region information and the time information correspond to a plurality of first algorithms. For specific implementation, refer to this example. Details are not described herein again.

In another possible implementation, the region information and/or the time information are/is used to construct a first neural network model. The third apparatus outputs the first fused information for the terminal based on the first neural network model and the first information. In this way, an initial neural network model is deployed, and the region information and/or the time information are/is input to the initial neural network model, so that the initial neural network model can be automatically adjusted to the first neural network model that adapts to scenarios corresponding to different spatial-temporal information, thereby improving performance of an intelligent driving system, and reducing training and deployment overheads of the sensing system.

In an example, the second information includes the region information. To be specific, the region information is used to construct one first neural network model corresponding to the region information. The first apparatus may input the region information to an initial model of a neural network, and the initial model is automatically adjusted to the first neural network model that adapts to the region information. Then, the first information is used as an input of the first neural network model, and then the first fused information for the terminal is output. Similarly, the second information includes the time information, and the time information is used to construct one first neural network model corresponding to the region information. For specific implementation, refer to the example in which the second information includes the region information. The second information includes the region information and the time information, and the region information and the time information are used to construct one first neural network model corresponding to the region information and the time information. For specific implementation, refer to the example in which the second information includes the region information. Details are not described herein again.

In another example, the second information includes the region information. To be specific, the region information is used to construct a plurality of first neural network models corresponding to the region information, and different first neural network models correspond to different sensors. The first apparatus may input the region information to a plurality of initial models of a neural network corresponding to different sensors. For example, a camera apparatus, a lidar, and a millimeter-wave radar are mounted on the terminal. The region information is input to an initial model corresponding to the camera apparatus. The initial model corresponding to the camera apparatus is automatically adjusted to the first neural network model that adapts to the region information and the camera apparatus. The region information is input to an initial model corresponding to the lidar. The initial model corresponding to the lidar is automatically adjusted to the first neural network model that adapts to the region information and the lidar. The region information is input to an initial model corresponding to the millimeter-wave radar. The initial model corresponding to the millimeter-wave radar is automatically adjusted to the first neural network model that adapts to the region information and the millimeter-wave radar. Then, environment information from the camera apparatus is input to the first neural network model that adapts to the region information and the camera apparatus, and a first processing result corresponding to the region information and the camera apparatus is output. Environment information from the lidar is input to the first neural network model that adapts to the region information and the lidar, and a second processing result corresponding to the region information and the millimeter-wave radar is output. Environment information from the millimeter-wave radar is input to the first neural network model that adapts to the region information and the millimeter-wave radar, and a third processing result corresponding to the region information and the millimeter-wave radar is output. Then, the fusion unit performs fusion on the first processing result, the second processing result, and the third processing result, and outputs the first fused information for the terminal. Similarly, the second information includes the time information, and the time information is used to construct a plurality of first neural network models corresponding to the region information. For specific implementation, refer to the example in which the second information includes the region information. The second information includes the region information and the time information, and the region information and the time information are used to construct a plurality of first neural network models corresponding to the region information and the time information. For specific implementation, refer to the example in which the second information includes the region information. Details are not described herein again.

In some other embodiments, reference may be made to the information processing system shown in FIG. 4. A difference of the implementation of this embodiment from the embodiment shown in FIG. 6 lies in that before S603, the first apparatus (for example, the sensor) may alternatively receive the region information and/or the time information from the second apparatus, and then the first apparatus may process the first information based on the region information and/or the time information, and then send the processed first information to the third apparatus (for example, the fusion unit).

In this embodiment of this application, the third apparatus (for example, the fusion unit) first receives the region information and/or the time information of the terminal, and then outputs the first fused information with reference to the environment information and the region information and/or the time information of the terminal, so that applicability of an intelligent driving system to scenarios corresponding to different spatial-temporal information can be improved, thereby improving performance of the intelligent driving system.

Based on the foregoing embodiments and a same concept, an embodiment of this application further provides an information processing apparatus, configured to perform the steps performed by the first apparatus in the foregoing method embodiments. For related features, refer to the foregoing method embodiments. Details are not described herein again.

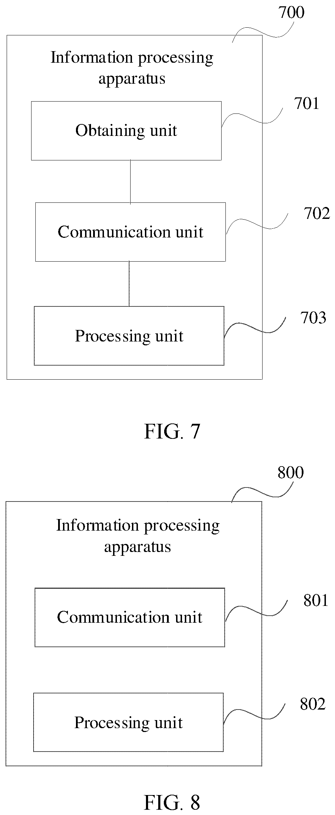

As shown in FIG. 7, the information processing apparatus 700 may include an obtaining unit 701, a communication unit 702, and a processing unit 703.

The obtaining unit 701 is configured to obtain first information. The first information includes environment information of a terminal in which a first apparatus is located.

The communication unit 702 is configured to receive second information from a second apparatus. The second information indicates region information and/or time information of the terminal.

The processing unit 703 is configured to output first sensed information for the terminal based on the first information and the second information.

In a possible implementation, the obtaining unit 701 is specifically configured to: detect the environment information of the terminal; or receive the first information from the second apparatus.

In a possible implementation, the region information and/or the time information correspond/corresponds to a first algorithm, and the first algorithm belongs to a predefined algorithm set. The processing unit 703 is specifically configured to output the first sensed information for the terminal based on the first algorithm and the first information.

In a possible implementation, the region information and/or the time information are/is used to construct a first neural network model. The processing unit 703 is specifically configured to output the first sensed information for the terminal based on the first neural network model.

In a possible implementation, the communication unit 702 is specifically configured to send the first sensed information to a fusion unit.

An embodiment of this application further provides an information processing apparatus, configured to perform the steps performed by the second apparatus or the third apparatus in the foregoing method embodiments. For related features, refer to the foregoing method embodiments. Details are not described herein again. As shown in FIG. 8, the information processing apparatus 800 may include a communication unit 801 and a processing unit 802.

When the information processing apparatus is configured to perform the steps performed by the third apparatus in the foregoing method embodiments, the communication unit 801 is configured to: receive at least one piece of first information from at least one first apparatus, where the first information includes environment information of a terminal in which the first apparatus is located; and receive second information from a second apparatus, where the second information indicates region information and/or time information of the terminal. The processing unit 802 is configured to output first fused information for the terminal based on the at least one piece of first information and the second information.

In a possible implementation, the region information and/or the time information correspond/corresponds to at least one first algorithm, and the at least one first algorithm belongs to a predefined algorithm set. The processing unit 802 is specifically configured to:
output the first fused information for the terminal based on the at least one first algorithm and the at least one piece of first information.

In a possible implementation, a plurality of algorithms in the predefined algorithm set respectively correspond to different sensors, and/or correspond to different region information and/or time information.

In a possible implementation, the region information and/or the time information are/is used to construct a first neural network model. The processing unit 802 is specifically configured to:
output the first fused information for the terminal based on the first neural network model.

In a possible implementation, the at least one piece of first information includes one or more pieces of information from at least one sensor, a user, a communication module, or a map module.

In a possible implementation, the region information includes any one or more of the following: a continent name, a country name, a region name, a province, or a city; and/or the time information includes time system information, where the time system information includes one or more of a season, a holiday, a solar term, or a seasonal timekeeping practice.

In a possible implementation, the first apparatus includes any one of the following: a camera apparatus; a lidar; a pickup apparatus; an ultrasonic sensor; or a millimeter-wave radar.

When the information processing apparatus is configured to perform the steps performed by the second apparatus in the foregoing method embodiments, the processing unit 802 is configured to determine second information. The second information indicates region information and/or time information of the terminal. The communication unit 801 is configured to send the second information to the first apparatus or the third apparatus.

In a possible implementation, the processing unit 802 is specifically configured to: determine the second information based on a user input, where the user input is a screen-based input or a voice input; or determine the second information based on a push of an operator; or determine the second information based on information from a map module.

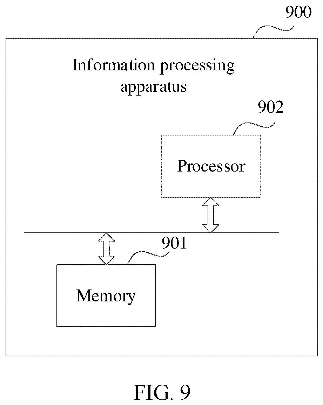

According to the foregoing method, FIG. 9 is a schematic diagram of a structure of an information processing apparatus according to an embodiment of this application. As shown in FIG. 9, the information processing apparatus 900 may be the first apparatus, the second apparatus, or the third apparatus in the foregoing embodiment. The information processing apparatus 900 may include a memory 901 and a processor 902, and may further include a bus system. The processor 902 and the memory 901 may be connected by using a bus system.

It should be understood that the processor 902 may be a chip. For example, the processor 902 may be a field programmable gate array (field programmable gate array, FPGA), an application-specific integrated circuit (application-specific integrated circuit, ASIC), a system on chip (system on chip, SoC), a central processing unit (central processor unit, CPU), a network processor (network processor, NP), a digital signal processing circuit (digital signal processor, DSP), a micro controller unit (micro controller unit, MCU), a programmable controller (programmable logic device, PLD), or another integrated chip.

In an implementation process, the steps of the foregoing methods may be accomplished by using a hardware integrated logic circuit in the processor 902 or by using instructions in a form of software. The steps of the methods disclosed with reference to embodiments of this application may be directly performed by a hardware processor, or may be performed by using a combination of hardware in the processor 902 and a software module. The software module may be located in a mature storage medium in the art, such as a random access memory, a flash memory, a read-only memory, a programmable read-only memory, an electrically erasable programmable memory, or a register. The storage medium is located in the memory 901. The processor 902 reads information in the memory 901, and completes the steps of the foregoing methods in combination with hardware of the processor 902.

It should be noted that the processor 902 in this embodiment of this application may be an integrated circuit chip, and has a signal processing capability. In an implementation process, the steps in the foregoing method embodiments are implemented by using a hardware integrated logic circuit in the processor, or by using instructions in a form of software. The processor may be a general purpose processor, a digital signal processor (DSP), an application specific integrated circuit (ASIC), a field programmable gate array (FPGA) or another programmable logic device, a discrete gate or a transistor logic device, or a discrete hardware component. Various methods, steps, and logical block diagrams disclosed in embodiments of this application may be implemented or executed. The general-purpose processor may be a microprocessor, or the processor may be any conventional processor or the like. The steps of the methods disclosed with reference to the embodiments of this application may be directly performed by a hardware decoding processor, or may be performed by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory 901 in embodiments of this application may be a volatile memory or a nonvolatile memory, or may include a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which serves as an external cache. By way of example but non-limiting description, RAMs in many forms are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and method described in this specification includes, but is not limited to, these and any other suitable type of memory.

This application further provides a vehicle, and the vehicle may include the foregoing information processing apparatus. In an example, the vehicle may be the first vehicle in this application.

According to the methods provided in embodiments of this application, this application further provides a computer program product. The computer program product includes computer program code or instructions. When the computer program code or the instructions are run on a computer, the computer is enabled to perform the method in any one of the embodiments.

According to the method provided in embodiments of this application, this application further provides a computer-readable storage medium. The computer-readable storage medium stores program code. When the program code is run on a computer, the computer is enabled to perform the method in any one of the foregoing method embodiments.

All or some of the foregoing embodiments may be implemented using software, hardware, firmware, or any combination thereof. When software is used to implement embodiments, the foregoing embodiments may be all or partially implemented in a form of a computer program product. The computer program product includes one or more computer instructions. When the computer program instructions are loaded or executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be accessed by the computer, or a data storage device, for example, a server or a data center in which one or more usable media are integrated. The usable medium may be a magnetic medium (for example, a floppy disk, a hard disk, or a magnetic tape), an optical medium (for example, a DVD), or a semiconductor medium. The semiconductor medium may be a solid-state drive (solid state drive, SSD).

A person skilled in the art may clearly understand that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be indirect couplings or communication connections by using some interfaces, apparatuses, or units, and may also be connection in electrical, mechanical, or other forms.

The units described as separate components may be or may not be physically separated, and the components displayed as units may be or may not be physical units, that is, may be located in one place or distributed on a plurality of network units. Some or all of the units may be selected according to actual requirements to achieve the objectives of the technical solutions of this application.

The foregoing descriptions are merely specific implementations of this application. Any variation or replacement readily figured out by a person skilled in the art based on the specific implementations provided in this application shall fall within the protection scope of this application.

## Claims

1. An information processing method, comprising:
obtaining first information, wherein the first information comprises environment information of a terminal in which a first apparatus is located;
receiving second information from a second apparatus, wherein the second information indicates region information and/or time information of the terminal; and
outputting first sensed information for the terminal based on the first information and the second information.

2. The method according to claim 1, wherein the obtaining first information comprises:
detecting the environment information of the terminal; or
receiving the first information from the second apparatus.

3. The method according to claim 1 or 2, wherein the region information and/or the time information correspond/corresponds to a first algorithm, and the first algorithm belongs to a predefined algorithm set; and
the outputting first sensed information for the terminal based on the first information and the second information comprises:
outputting the first sensed information for the terminal based on the first algorithm and the first information.

4. The method according to any one of claims 1 to 3, wherein the region information and/or the time information are/is used to construct a first neural network model; and
the outputting first sensed information for the terminal based on the first information and the second information comprises:
outputting the first sensed information for the terminal based on the first neural network model.

5. The method according to any one of claims 1 to 4, wherein the outputting first sensed information for the terminal based on the first information and the second information comprises:
sending the first sensed information to a fusion unit.

6. An information processing method, comprising:
receiving at least one piece of first information from at least one first apparatus, wherein the first information comprises environment information of a terminal in which the first apparatus is located;
receiving second information from a second apparatus, wherein the second information indicates region information and/or time information of the terminal; and
outputting first fused information for the terminal based on the at least one piece of first information and the second information.

7. The method according to claim 6, wherein the region information and/or the time information correspond/corresponds to at least one first algorithm, and the at least one first algorithm belongs to a predefined algorithm set; and
the outputting first fused information for the terminal based on the at least one piece of first information and the second information comprises:
outputting the first fused information for the terminal based on the at least one first algorithm and the at least one piece of first information.

8. The method according to claim 7, wherein a plurality of algorithms in the predefined algorithm set correspond to different sensors, and/or correspond to different regions and/or time.

9. The method according to any one of claims 6 to 8, wherein the region information and/or the time information are/is used to construct a first neural network model; and
the outputting first fused information for the terminal based on the at least one piece of first information and the second information comprises:
outputting the first fused information for the terminal based on the first neural network model.

10. The method according to any one of claims 6 to 9, wherein the at least one piece of first information comprises one or more pieces of information from at least one sensor, a user, a communication module, or a map module.

11. The method according to any one of claims 1 to 9, wherein the region information comprises one or more of a continent name, a country name, a region name, a province, or a city; and/or
the time information comprises time system information, wherein the time system information comprises one or more of a season, a holiday, a solar term, or a seasonal timekeeping practice.

12. The method according to any one of claims 1 to 10, wherein the first apparatus comprises any one of the following:
a camera apparatus; a lidar; a pickup apparatus; an ultrasonic sensor; or a millimeter-wave radar.

13. An information processing method, comprising:
determining second information, wherein the second information indicates region information and/or time information of a terminal; and
sending the second information to a first apparatus.

14. The method according to claim 13, wherein the determining second information comprises:
determining the second information based on a user input, wherein the user input is a screen-based input or a voice input; or
determining the second information based on a push of an operator; or
determining the second information based on information from a map module.

15. An information processing apparatus, comprising:
an obtaining unit, configured to obtain first information, wherein the first information comprises environment information of a terminal in which a first apparatus is located;
a communication unit, configured to receive second information from a second apparatus, wherein the second information indicates region information and/or time information of the terminal; and
a processing unit, configured to output first sensed information for the terminal based on the first information and the second information.

16. The apparatus according to claim 15, wherein the obtaining unit is specifically configured to:
detect the environment information of the terminal; or
receive the first information from the second apparatus.

17. The apparatus according to claim 15 or 16, wherein the region information and/or the time information correspond/corresponds to a first algorithm, and the first algorithm belongs to a predefined algorithm set; and the processing unit is specifically configured to:
output the first sensed information for the terminal based on the first algorithm and the first information.

18. The apparatus according to any one of claims 15 to 17, wherein the region information and/or the time information are/is used to construct a first neural network model; and the processing unit is specifically configured to:
output the first sensed information for the terminal based on the first neural network model.

19. The apparatus according to any one of claims 15 to 18, wherein the communication unit is specifically configured to:
send the first sensed information to a fusion unit.

20. An information processing apparatus, comprising:
a communication unit, configured to: receive at least one piece of first information from at least one first apparatus, wherein the first information comprises environment information of a terminal in which the first apparatus is located; and receive second information from a second apparatus, wherein the second information indicates region information and/or time information of the terminal; and
a processing unit, configured to output first fused information for the terminal based on the at least one piece of first information and the second information.

21. The apparatus according to claim 20, wherein the region information and/or the time information correspond/corresponds to at least one first algorithm, and the at least one first algorithm belongs to a predefined algorithm set; and the processing unit is specifically configured to:
output the first fused information for the terminal based on the at least one first algorithm and the at least one piece of first information.

22. The apparatus according to claim 21, wherein a plurality of algorithms in the predefined algorithm set respectively correspond to different sensors, and/or correspond to different regions and/or time.

23. The apparatus according to any one of claims 20 to 22, wherein the region information and/or the time information are/is used to construct a first neural network model; and the processing unit is specifically configured to:
output the first fused information for the terminal based on the first neural network model.

24. The apparatus according to any one of claims 20 to 23, wherein the at least one piece of first information comprises one or more pieces of information from at least one sensor, a user, a communication module, or a map module.

25. The apparatus according to any one of claims 15 to 24, wherein the region information comprises one or more of the following: a continent name, a country name, a region name, a province, or a city; and/or
the time information comprises time system information, wherein the time system information comprises one or more of a season, a holiday, a solar term, or a seasonal timekeeping practice.

26. The apparatus according to any one of claims 15 to 25, wherein the first apparatus comprises any one of the following:
a camera apparatus; a lidar; a pickup apparatus; an ultrasonic sensor; or a millimeter-wave radar.

27. An information processing apparatus, comprising:
a processing unit, configured to determine second information, wherein the second information indicates region information and/or time information of a terminal; and
a communication unit, configured to send the second information to a first apparatus or a third apparatus.

28. The apparatus according to claim 27, wherein the processing unit is specifically configured to:
determine the second information based on a user input, wherein the user input is a screen-based input or a voice input; or
determine the second information based on a push of an operator; or
determine the second information based on information from a map module.

29. An information processing apparatus, comprising at least one processor and a communication interface, wherein the communication interface is configured to: receive a signal from a communication apparatus other than the information processing apparatus and transmit the signal to the at least one processor, or send a signal from the at least one processor to a communication apparatus other than the information processing apparatus; and the at least one processor is configured to implement, through a logic circuit or by executing code instructions, the method according to any one of claims 1 to 5, or the method according to any one of claims 6 to 12, or the method according to any one of claims 13 and 14.

30. A terminal, wherein the terminal comprises the apparatus according to any one of claims 15 to 19 and the apparatus according to any one of claims 27 and 28; or
the terminal comprises the apparatus according to any one of claims 20 to 26 and the apparatus according to any one of claims 27 and 28.

31. A computer-readable storage medium, wherein the computer-readable storage medium stores a computer program, and when the computer program is run, the method according to any one of claims 1 to 5 is implemented, or the method according to any one of claims 6 to 12 is implemented, or the method according to any one of claims 13 and 14 is implemented.

32. A computer program product, wherein the computer program product comprises a computer program or instructions, and when the computer program or the instructions is/are executed by a communication apparatus, the method according to any one of claims 1 to 5 is implemented, or the method according to any one of claims 6 to 12 is implemented, or the method according to any one of claims 13 and 14 is implemented.
